(19) Europäisches Patentamt
European Patent Office
Office européen des brevets

(11) **EP 2 701 067 A1**

(12) **EUROPEAN PATENT APPLICATION**
published in accordance with Art. 153(4) EPC

(43) Date of publication:
**26.02.2014 Bulletin 2014/09**

(51) Int Cl.:
*G06F 13/00* (2006.01)          *G06F 12/00* (2006.01)

(21) Application number: **12773757.5**

(22) Date of filing: **20.04.2012**

(86) International application number:
**PCT/JP2012/060689**

(87) International publication number:
**WO 2012/144588 (26.10.2012 Gazette 2012/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.04.2011   JP 2011096251**

(71) Applicant: **NEC Corporation Tokyo 108-8001 (JP)**

(72) Inventor: **OZAWA, Kazunori Tokyo 108-8001 (JP)**

(74) Representative: **Betten & Resch Theatinerstrasse 8 80333 München (DE)**

(54) **CONTENT DISTRIBUTION SYSTEM, CONTROL DEVICE, AND CONTENT DISTRIBUTION METHOD**

(57)    A control apparatus calculates an access frequency for a content item stored in each of a plurality of cache servers temporarily holding the content item based on a number of accesses to the content item, determines an arrangement of content items to the plurality of cache servers using at least one of load status of the plurality of cache servers, topology information of the mobile network, location information of a terminal requesting a content item, and the access frequency, instructs the plurality of cache servers to hold a content item according to the determined arrangement, and, upon reception of a request for a content item from a terminal, instructs a cache server holding the requested content item among the plurality of cache servers to send the requested content item via a packet forwarding apparatus. Congestion can be avoided when content is distributed in a mobile network.

FIG. 1

**Description**

[Field]

(REFERENCE TO RELATED APPLICATION)

This application is based upon and claims the benefit of the priority of Japanese Patent Application No. 2011-096251 filed on April 22, 2011, the disclosure of which is incorporated herein in its entirety by reference thereto.
The present invention relates to a content distribution system, control apparatus, and content distribution method, and particularly to a content distribution system, control apparatus for the same, and content distribution method that cache content (content item) such as videos, images, audio, software, and applications in a mobile network and distribute the content to terminals such as mobile telephones, smartphones, PCs (Personal Computers), and game devices.

[Background]

As the speed and capacity of mobile networks increase, content distribution that distributes content to mobile terminals via a mobile network is becoming popular. In the near future, it is expected that the speed and capacity of mobile networks will increase even further due to technologies such as LTE (Long Term Evolution) and EPC (Evolved Packet Core).
Patent Literature (PTL) 1 describes a technology that reduces the access time and prevents network congestion by providing a cache apparatus in a content distribution system.

[Citation List]

[Patent Literature]

[PTL 1]
Japanese Patent Kokai Publication No. JP2003-228534A

[Summary]

[Technical Problem]

The entire disclosure of the above Patent Literature 1 is incorporated herein in its entirety by reference thereto. The following analysis is given by the present inventor.
It is predicted that the amount of data traffic in a mobile network will increase eight- to tenfold by 2013, compared to the current amount, and that the majority of the data will be video content. Further, the size of video content has been increasing due to the performance increase of terminals associated with the rapid spread of smartphones, and high-capacity content in high-definition resolution is expected to be distributed in a mobile network in the near future.
Meanwhile, when distributing content such as images, videos, audio, software, and applications in a conventional mobile network, a content distribution server receives content requests from all terminals via a packet forwarding apparatus and distributes content to all the terminals via the packet forwarding apparatus.
In such a configuration, however, the following problem occurs. First, when access from the terminals concentrates on popular content, the traffic reaches and concentrates on the content distribution server in the mobile network and a rapid increase in the network load causes congestion in the mobile network. Especially when the number of the terminals increases or the size of content is large, the network is often overcrowded and delay and packet loss occur, causing frozen images and intermittent audio on the terminal side.
Second, since the distance between the terminals and the content distribution server is long, it takes time for content to reach the terminals, increasing the delay time between a request issued by a terminal and the playback of the content, and deteriorating the end user's QoE (Quality of Experience).
Therefore, there is a need in the art to avoid congestion when content is distributed in a mobile network. It is an object of the present invention to provide a content distribution system, control apparatus, and content distribution method that contribute to meet the need.

[Solution to Problem]

According to a first aspect of the present invention, there is provided a content distribution system. The content distribution system comprises in a mobile network: a plurality of packet forwarding apparatuses that forward a packet; a plurality of cache servers that temporarily hold a content item and send the content item via any one of the plurality of packet forwarding apparatuses; and a control apparatus that controls the plurality of cache servers. The control apparatus comprises: an access measurement unit that calculates an access frequency for a content item stored in each of the plurality of cache servers based on a number of accesses to the content item; a content arrangement determining unit that determines an arrangement of content items to the plurality of cache servers using at least one of load status of the plurality of cache servers, topology information of the mobile network, location information of a terminal requesting a content item, and the access frequency, and that instructs the plurality of cache servers to hold a content item according to the determined arrangement; and a cache server selection unit that, upon reception of a request for a content item from a terminal, instructs a cache server holding the requested content item among the plurality of cache servers to send the requested content item.

According to a second aspect of the present invention, there is provided a control apparatus that controls in a mobile network a plurality of cache servers that temporarily hold a content item. The control apparatus comprises: an access measurement unit that calculates an access frequency for a content item stored in each of the plurality of cache servers based on a number of accesses to the content item; a content arrangement determining unit that determines an arrangement of content items to the plurality of cache servers using at least one of load status of the plurality of cache servers, topology information of the mobile network, location information of a terminal requesting a content item, and the access frequency, and that instructs the plurality of cache servers to hold a content item according to the determined arrangement; and a cache server selection unit that, upon reception of a request for a content item from a terminal, instructs a cache server holding the requested content item among the plurality of cache servers to send the requested content item via a packet forwarding apparatus.

According to a third aspect of the present invention, there is provided a content distribution method. The content distribution method comprises: by a control apparatus that controls in a mobile network a plurality of cache servers that temporarily hold a content item, calculating an access frequency for a content item stored in each of the plurality of cache servers based on a number of accesses to the content item; determining an arrangement of content items to the plurality of cache servers using at least one of load status of the plurality of cache servers, topology information of the mobile network, location information of a terminal requesting a content item, and the access frequency; instructing the plurality of cache servers to hold a content item according to the determined arrangement; and upon reception of a request for a content item from a terminal, instructing a cache server holding the requested content item among the plurality of cache servers to send the requested content item via a packet forwarding apparatus.

[Advantageous Effects of Invention]

According to a content distribution system, control apparatus, and content distribution method relating to the present invention, congestion can be avoided when content is distributed in a mobile network.

[Brief Description of Drawings]

Fig. 1 is a block diagram illustrating a configuration of a content distribution system according to a first exemplary embodiment.
Fig. 2 is a block diagram illustrating an example of a control apparatus in the content distribution system according to the first exemplary embodiment.
Fig. 3 is a block diagram illustrating an example of a cache server in the content distribution system according to the first exemplary embodiment.
Fig. 4 is a block diagram illustrating a configuration of a content distribution system relating to a second exemplary embodiment.

[Description of Embodiments]

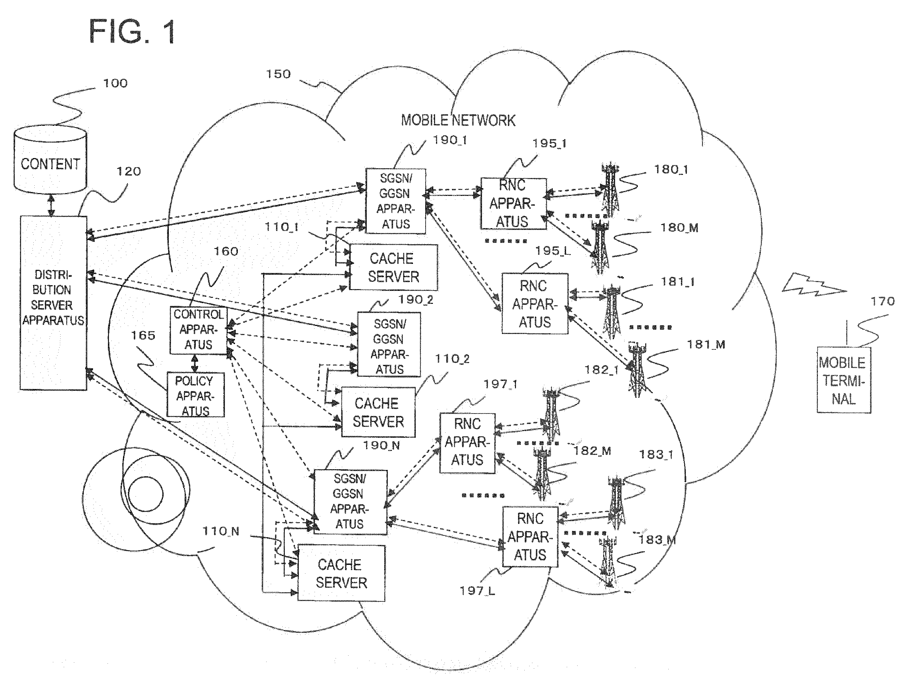

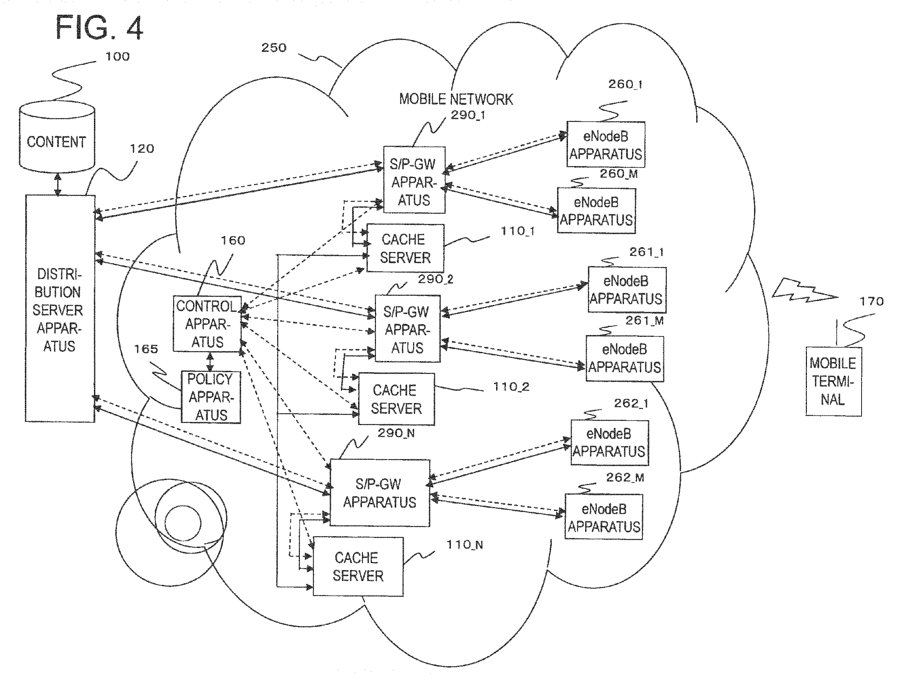

First, a summary of the present invention will be given. Note that drawing reference signs in the summary are illustrated examples solely for facilitating understanding and are not intended to limit the present invention to illustrated examples.
With reference to Figs. 1, 2, and 4, a content distribution system of the present invention comprises in a mobile network (150, 250): a plurality of packet forwarding apparatuses (SGSN/GGSN apparatuses 190_1 to 190_N in Fig. 1 or S/P-GW apparatuses 290_1 to 290_N in Fig. 4) that forward a packet; a plurality of cache servers (110_1 to 110_N) that temporarily hold a content item and send the content item via any one of the plurality of packet forwarding apparatuses (190_1 to 190_N, 290_1 to 290_N); and a control apparatus (160) that controls the plurality of cache servers (110_1 to 110_N). The control apparatus (160) comprises: an access measurement unit (184) that calculates an access frequency for a content item stored in each of the plurality of cache servers (110_1 to 110_N) based on a number of accesses to the content item; a content arrangement determining unit (185) that determines an arrangement of content items to the plurality of cache servers (110_1 to 110_N) using at least two of load status of the plurality of cache servers (110_1 to 110_N), topology information of the mobile network (150, 250), location information of a terminal (mobile terminal 170) requesting a content item, and the access frequency, and that instructs the plurality of cache servers (110_1 to 110_N) to hold a content item according to the determined arrangement; and a cache server selection unit (187) that, upon reception of a request for a content item from a terminal

(170), instructs a cache server holding the requested content item among the plurality of cache servers (110_1 to 110_N) to send the requested content item.

According to the content distribution system relating to the present invention, congestion can be avoided when content is distributed in the mobile network (150, 250).

Further, in the present invention, the following modes are possible.

(Mode 1)

A content distribution system may be the content distribution system according to the first aspect.

(Mode 2)

The content arrangement determining unit may arrange a content item to a cache server with a smallest $\Sigma_j C_{ij} * A_j * S_j$ where $A_j$ denotes an access frequency for a jth content item, $S_j$ a size of the jth content item, and $C_{ij}$ a cost function for an ith cache server among the plurality of cache servers.

(Mode 3)

The content arrangement determining unit may calculate the cost function $C_{ij}$ based on load information of the ith cache server among the plurality of cache servers, the topology information of the mobile network, and the location information of the terminal, or on the load information and the topology information.

(Mode 4)

The content arrangement determining unit may determine an arrangement of content items at a predetermined time interval or when a predetermined condition is met.

(Mode 5)

The access measurement unit may collect a number of accesses to a content item stored in each of the plurality of cache servers at a predetermined time interval or when a predetermined condition is met

(Mode 6)

The plurality of packet forwarding apparatuses may be SGSN apparatuses, GGSN apparatuses, or SGSN/ GGSN apparatuses in a mobile network, or S-GW apparatuses, P-GW apparatuses, or S/P-GW apparatuses in a mobile EPC network.

(Mode 7)

The content may include at least one of video, still image, voice, audio, software, application, and data.

(Mode 8)

A control apparatus may be the control apparatus according to the second aspect.

(Mode 9)

In the control apparatus, the content arrangement determining unit may arrange a content item to a cache server with a smallest $\Sigma_j Cij*Aj*Sj$ where Aj denotes an access frequency for a jth content item, Sj a size of the jth content item, and Cij a cost function for an ith cache server among the plurality of cache servers.

(Mode 10)

In the control apparatus, the content arrangement determining unit may calculate the cost function Cij based on load information of the ith cache server among the plurality of cache servers, the topology information of the mobile network, and the location information of the terminal, or on the load information and the topology information.

(Mode 11)

A content distribution method may be the content distribution method according to the third aspect.

(Mode 12)

In the content distribution method, the control apparatus may arrange a content item to a cache server with a smallest $\Sigma j Cij*Aj*Sj$ where Aj denotes an access frequency a jth content item, Sj a size of the jth content item, and Cij a cost function for an ith cache server among the plurality of cache servers.

(Mode 13)

In the content distribution method, the control apparatus may calculate the cost function Cij based on load information of the ith cache server among the plurality of cache servers, the topology information of the mobile network, and the location information of the terminal, or on the load information and the topology information.

<First Exemplary Embodiment>

A configuration and operation of a content distribution system according to a first exemplary embodiment will be described with reference to Figs. 1 to 3. Note that the content mentioned in the exemplary embodiments below is assumed to be video, but the same configuration can be employed when the content is a still image, audio, voice, software, application, and data.

Fig. 1 is a block diagram illustrating a configuration example of the content distribution system of the present exemplary embodiment. In the present exemplary embodiment, a 3G (3rd Generation) mobile network is used as the mobile network 150, and an SGSN/GGSN apparatus is used as the packet forwarding apparatus.

In Fig. 1, as content 100, a distribution server apparatus 120 stores a compression-encoded bit stream of content including at least one type of content (video, still images, audio, voice, etc.) or a file storing a compression-encoded bit stream in advance.

Over the mobile network 150, N number (N $\geqq$ 2) of the SGSN/GGSN apparatuses 190_1 to 190_N are disposed, RNC (Radio Network Controller) apparatuses 195_1 to 195_L (L $\geqq$ 2) are connected to the SGSN/GGSN apparatus 190_1, and RNC apparatuses 197_1 to 197_L are connected to the SGSN/GGSN apparatus 190_N. Note that L number of RNC apparatuses are connected to the SGSN/GGSN apparatus 190_2 as well, but they are omitted in Fig. 1 to save space. Further, M number (M $\geqq$ 2) of base station apparatuses are connected to each RNC apparatus. For instance, M number of base station apparatuses 180_1 to 180_M are connected to the RNC apparatus 195_1.

Here, one cache server is connected to each SGSN/GGSN apparatus. For instance, to the SGSN/GGSN apparatus 190_1, the cache server 110_1 is connected.

Further, N number (N $\geqq$ 2) of the cache servers 110_1 to 110_N are connected by a cache server interface to each other. Further, N number of the cache servers 110_1 to 110_N are connected to the single control apparatus 160.

The mobile terminal 170 writes an IP (Internet Protocol) address of the distribution server apparatus 120 and issues a delivery connection request message. Then, a base station apparatus in the service area (any one of the base station apparatuses 181_1 to 181_M in the case of Fig. 1) receives the connection request message and sends the connection request message to the RNC apparatus (the RNC apparatus 195_L in the case of Fig. 1) that manages the base station apparatuses.

The RNC apparatus 195_L receives the connection request message from the base station apparatus, stores the connection request message, the IP address of the distribution server apparatus 120, and an IP address of the mobile terminal 170 in the payload of the GTP-U (GPRS (General Packet Radio Service) Tunneling Protocol for User Plane) protocol, and forwards a GTP packet to the SGSN/GGSN apparatus 190_1 that manages the RNC apparatuses 195_1 to 195_L. Here, the SGSN/GGSN apparatus refers to a configuration in which an SGSN (serving GPRS Support Node) apparatus and a GGSN (Gateway GPRS Support Node) apparatus are integrated.

Next, the SGSN/GGSN apparatus 190_1 receives the GTP packet.

The cache server 110_1 is connected to the SGSN/GGSN apparatus 190_1 and the cache server 110_N is connected to the SGSN/GGSN apparatus 190_N.

To the control apparatus 160, the cache servers 110_1 to 110_N and a policy apparatus 165 are connected. The control apparatus 160 receives the load status information and the access level information for each piece of the content from each cache server, receives the location information of the mobile terminal 170 from the packet forwarding apparatus, receives the network topology information from the policy apparatus 165, determines the arrangement of the content to the cache servers using at least two of these pieces of information, and issues a content arrangement instruction to each cache server. Further, according to criteria based on the location information of the mobile terminal 170 and the load status information, the control apparatus 160 selects a cache server meeting the criteria in response to a content request from the mobile terminal 170, and instructs the selected cache server to distribute the content to the mobile terminal 170 via the packet forwarding apparatus.

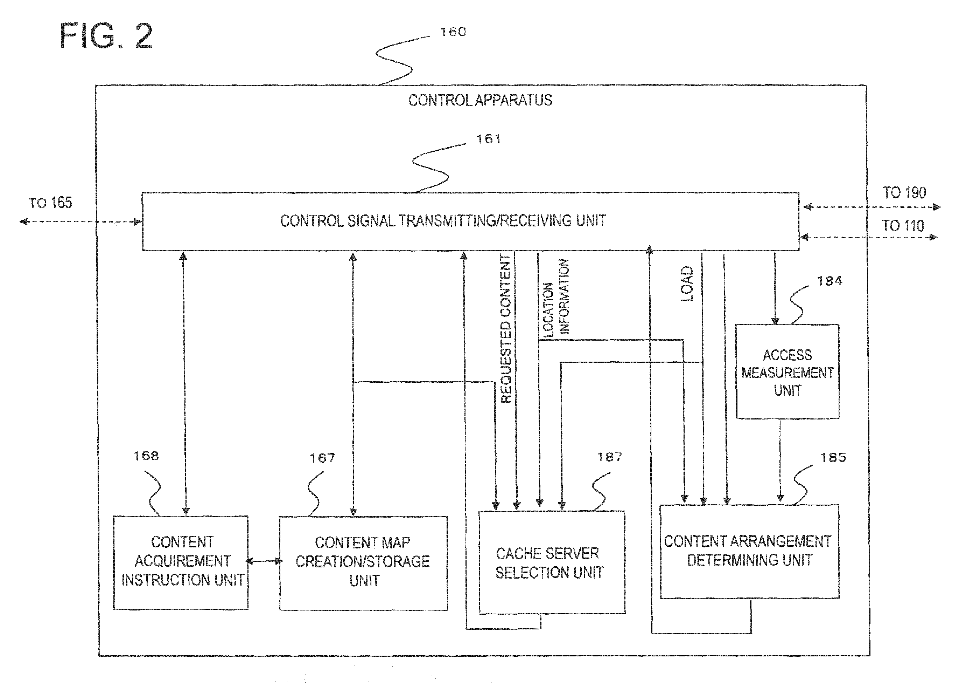

Next, the configuration of the control apparatus 160 will be described with reference to Fig. 2. Fig. 2 is a block diagram illustrating a configuration example of the control apparatus 160. With reference to Fig. 2, the control apparatus 160 comprises a control signal transmitting/receiving unit 161, the access measurement unit 184, the content arrangement determining unit 185, the cache server selection unit 187, a content map creation/storage unit 167, and a content acquirement instruction unit 168.

The control signal transmitting/receiving unit 161 receives the access frequency information of each piece of the content and the load information of each cache server from each of the cache servers 110_1 to 110_N, outputs the former to the access measurement unit 184, and outputs the latter to the content arrangement determining unit 185 and the cache server selection unit 187. Further, the control signal transmitting/receiving unit 161 receives information such as the cost of each link from the policy apparatus 165 as the network topology information, and outputs it to the content arrangement determining unit 185. Furthermore, the control signal transmitting/receiving unit 161 receives the location information of the mobile terminal 170 from the packet forwarding apparatus 190_1, and outputs it to the content arrangement determining unit 185 and the cache server selection unit 187.

The access measurement unit 184 collects the number of accesses to each piece of the content from each cache server at each predetermined time interval or whenever a predetermined condition is met, add them up for each piece of the content, aggregates the access frequency to all the cache servers for each piece of the content, and outputs the results to the content arrangement determining unit 185. Here, for instance, the predetermined condition may be when the number of accesses to particular content exceeds a predetermined threshold value, or any other condition may be used.

The content arrangement determining unit 185 receives the load information of the cache servers, the network topology information, and the location information of the mobile terminal 170 from the control signal transmitting/receiving unit 161, receives the access frequency of each piece of the content from the access measurement unit 184, calculates Mathematical Formula 1 for each of the plurality of pieces of the content, and determines a cache server that should hold the content. Since the total storage capacity of all the cache servers is limited, it is not realistic to determine a cache server that should hold each piece of the content. Therefore, the arrangement of content may be determined within a predetermined and restricted range of content. For instance, a method that restricts the content to the one having access levels, collected by the access measurement unit 185, in the top P can be employed.

$$Di = \min_i \Sigma_j Cij * Aj * Sj \qquad\qquad 1$$

From Math. 1, the content arrangement determining unit 185 selects a cache server i with the smallest Di. Here, Di in Math. 1 denotes an evaluation function for an ith cache server; Cij a cost function for an ith cache server; Aj the access frequency for an jth piece of the content; and Sj the size of the jth piece of the content. Further, $\Sigma_j$ represents the sum regarding j. Here, the cost function Cij is calculated according to criteria predetermined from the network topology information, the load information of the ith cache server, and the location information of the mobile terminal 170.

Three types of information (the network topology information, the load information, and the location information) are used in Math. 1, but two types may be used as well. When two types are used, criteria consisting of the network information and the load information of the cache servers may be employed for the calculation of the cost function Cij.

Further, the content arrangement determining unit 185 may perform the calculation of the content arrangement by Math. 1 and instructs a cache server to cache the target content at a predetermined time interval or whenever a predetermined condition is met. Here, for instance, the predetermined condition may be when the access frequency collected by the access measurement unit 184 changes compared to the access frequency in the past and the degree of the change exceeds a predetermined threshold value, or any other condition may be used. Further, the content arrangement determining unit 185 may use a mathematical formula other than Math. 1.

The cache server selection unit 187 receives the location information of the mobile terminal 170, the load information of each cache server, and the information of the content requested by the mobile terminal 170 (for instance the URL (Uniform Resource Locator) of the content, etc.) from the control signal transmitting/receiving unit 161 and receives a content map from the content map creation/storage unit 167. Here, the content map is a map that indicates which content each cache server caches. The cache server selection unit 187 first selects a cache server group that caches the content requested by the mobile terminal 170, and selects a cache server with a load not greater than a predetermined threshold value and closest to the mobile terminal 170 using the load information and the location information. The cache server selection unit 187 instructs the selected cache server to distribute the content requested by the mobile terminal 170 to the packet forwarding apparatus.

Next, the content map creation/storage unit 167 receives a content list from each of the cache servers 110_1 to 110_N via the control signal transmitting/receiving unit 161 at a predetermined time interval, creates the content map that shows which content is temporarily stored in which cache server, and stores it.

The content acquirement instruction unit 168 reads the content map from the content map creation/storage unit 167 and determines whether or not the content acquirement instruction unit 168 itself temporarily stores the content requested by the mobile terminal 170. If it does, the content acquirement instruction unit 168 does not send any notification to the other cache servers. On the other hand, if it does not, after determining which cache server among the cache servers other than this cache server stores the content from the content map, the content acquirement instruction unit 168 outputs a content acquirement notification to the cache server via the control signal transmitting/receiving unit 161. The content acquirement notification includes the following two notifications, i.e., a notification of the IP address of the cache server that stores the requested content and a notification that instructs to acquire the content. Further, when the requested content is not stored by any cache server, the IP address of the distribution server apparatus 120 is notified, instead of the IP address of the cache server.

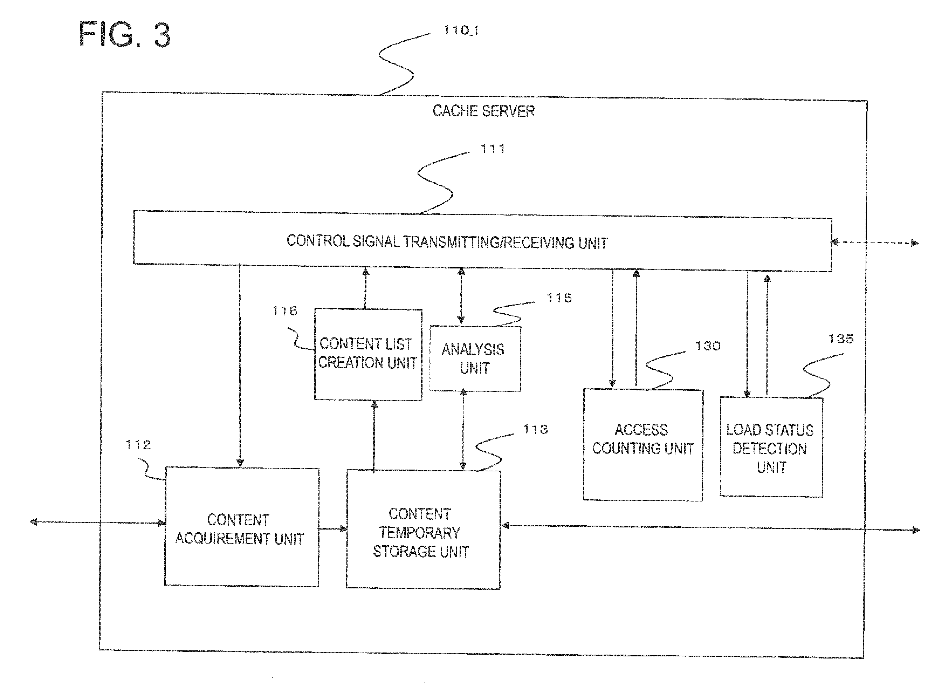

Next, as a configuration example of the cache server, the configuration of the cache server 110_1 connected to the SGSN/GGSN apparatus 190_1 will be described with reference to Fig. 3. Note that, since the other cache servers 110_2 to 110_N are configured identically to the cache server 110_1, the explanation will be omitted.

Fig. 3 is a block diagram illustrating a configuration example of the cache server 110_1. With reference to Fig. 3, the cache server 110_1 comprises a control signal transmitting/receiving unit 111, an analysis unit 115, a content temporary storage unit 113, a content list creation unit 116, a content acquirement unit 112, an access counting unit 130, and a load status detection unit 135.

The control signal transmitting/receiving unit 111 receives the connection request message and the reception IP address of the mobile terminal 170 from the mobile terminal 170, the GTP packet that stores the URL of the requested content, and the location information of the mobile terminal 170 from the SGSN/GGSN apparatus 190_1, and outputs these pieces of the information to the analysis unit 115.

The analysis unit 115 reads the content of the connection request message stored in the payload of the GTP packet, extracts information such as the reception IP address of the mobile terminal 170 and the URL of the requested content, and sends these pieces of information to the control apparatus 160 via the control signal transmitting/receiving unit 111. Further, the analysis unit 115 sends the location information of the mobile terminal 170 to the control apparatus 160.

According to a content arrangement decision instruction sent from the control apparatus 160 and received via the control signal transmitting/receiving unit 111, the content acquirement unit 112 reads the content instructed to be placed from another cache server or the distribution server apparatus 120, and stores the content in the content temporary storage unit 113.

The content temporary storage unit 113 temporarily stores the content acquired from another cache server or the distribution server apparatus 120.

The content list creation unit 116 creates a content list of all the content stored in the content temporary storage unit 113 at a predetermined time interval or when a predetermined condition is met, and sends the content list to the control apparatus 160 via the control signal transmitting/receiving unit 111 at a predetermined time interval.

The access counting unit 130 counts the number of the connection requests from the mobile terminal 170 within a predetermined time range for each piece of the content stored by the cache server 110_1 in the content temporary storage unit 113, calculates the number of accesses for each piece of the content, and sends the results to the control apparatus 160 via the control signal transmitting/receiving unit 111.

The load status detection unit 135 measures a load status Q of the cache server 110_1 at a predetermined time interval or when a predetermined condition is met, and sends the measured load status Q to the control apparatus 160 via the control signal transmitting/receiving unit 111. Here, for instance, the predetermined condition may be when the control apparatus 160 requests the cache server to transmit the load status or any other condition may be used.

For instance, the load status detection unit 135 may calculate the load status Q according to Mathematical Formula 2.

$$Q = \Sigma_j A j * S j \qquad 2$$

In Math. 2, Q denotes an index indicating the load status of the cache server; Sj the size of a jth piece of the content temporarily stored in the cache server; and Aj the number of requests for the jth piece of the content. Note that the load condition [status?] detection unit 135 may use any other criteria.

In Fig. 1, one SGSN/GGSN apparatus is connected to one cache server, but a single cache server may be connected to a plurality of SGSN/GGSN apparatuses, or one SGSN/GGSN apparatus may be connected to a plurality of cache servers.

The distribution server apparatus 120 may be connected to the cache servers 110_1 to 110_N.

Further, in Fig. 1, the SGSN/GGSN apparatus that integrates an SGSN apparatus with a GGSN apparatus is used, but a configuration in which the SGSN apparatus and the GGSN apparatus are separated may be employed. In this configuration, at least one cache server may be connected to the SGSN apparatus or the GGSN apparatus.

Further, the mobile terminal 170 may be a mobile telephone, smartphone, or PC with a data communication card, as long as it can communicate with a mobile 3G network.

<Second Exemplary Embodiment>

A configuration and operation of a content distribution system according to a second exemplary embodiment will be described with reference to Fig 4. Fig. 4 is a block diagram illustrating a configuration example of the content distribution system of the present exemplary embodiment. In Fig. 4, since components designated with the same numbers as in Fig. 1 operate identically to those in Fig. 1, the explanation will be omitted.

With reference to Fig. 4, an LTE (Long Term Evolution)/EPC (Evolved Packet Core) network, which is a 3.9th generation mobile network, is used as the mobile network 250 in the present exemplary embodiment, instead of the 3G mobile packet network. In the LTE, only eNodeB apparatuses are used, instead of the functions of the base station apparatus and the RNC apparatus.

Further, in the EPC, an S/P-GW (Serving/Packet Data Network Gateway) apparatus is connected to the eNodeB apparatus. Here, the S/P-GW apparatus means a configuration in which an S-GW apparatus and a P-GW apparatus are integrated. With reference to Fig. 4, M number of eNodeB apparatuses are connected to a single S/P-GW apparatus. For instance, eNodeB apparatuses 260_1 to 260_M are connected to an S/P-GW apparatus 290_1.

Here, one cache server is connected to each S/P-GW apparatus. For instance, the cache server 110_1 is connected to the S/P-GW apparatus 290_1.

The mobile terminal 170 writes the IP address of the distribution server apparatus 120 and issues a delivery connection request message. Then, an eNodeB apparatus in the service area of the mobile terminal 170 (any one of the eNodeB apparatuses 261_1 to 261_M in the case of Fig. 4) receives the connection request message. One of the eNodeB apparatuses 261_1 to 261_M stores the connection request message, the IP address of the distribution server apparatus 120, and the IP address of the mobile terminal 170 in the payload of the GTP protocol, and forwards a GTP packet to an S/P-GW apparatus 290_2.

The cache server 110_1 has the same configuration as the one shown in Fig. 3. In the present exemplary embodiment, however, the control signal transmitting/receiving unit 111 is connected to the S/P-GW apparatus 290_1. Therefore, the control signal transmitting/receiving unit 111 receives the connection request message from the mobile terminal 170, the GTP packet storing the IP address, etc., and the location information of the mobile terminal 170 from the S/P-GW apparatus 290_1. Further, each of the other cache servers 110_2 to 110_N performs the exchange described above with the connected S/P-GW apparatus.

Further, in the present exemplary embodiment, the distribution server apparatus 120 is connected to the S/P-GW apparatuses 290_1 to 290_N.

In Fig. 4, one cache server is connected to one single S/P-GW apparatus, but a cache server may be connected to a plurality of S/P-GW apparatuses, or one S/P-GW apparatus may be connected to a plurality of cache servers.

Further, the distribution server apparatus 120 may be connected to the cache servers 110_1 to 110_N.

In Fig. 4, the S/P-GW apparatus that integrates an S-GW apparatus with a P-GW apparatus is used, but a configuration in which the S-GW apparatus and the P-GW apparatus are separated may be employed. In this configuration, at least one cache server may be connected to the S-GW apparatus or the P-GW apparatus.

Further, the mobile terminal 170 may be a mobile telephone, smartphone, or PC with a data communication card, as long as it can communicate with a 3.9G mobile network.

According to the content distribution systems relating to the first and the second exemplary embodiments, the following effects can be obtained. First, by having the control apparatus determine the arrangement of content in the cache servers using at least two evaluation criteria out of the load status information, the access level information, the location information of the terminal, and the network topology information and instruct a cache server to cache the placed content, the traffic of the mobile network can be dispersed, and the concentration of the network load and congestion in the mobile network can be avoided even when accesses concentrate on popular content. At this time, even with increases in the number of terminals and the size of the content, delay or packet loss will not occur, and the terminals will not experience any frozen image and intermittent audio.

Second, by having the control apparatus select a cache server that meets predetermined criteria based on the location information of the terminal, and having this cache server distribute the content to the terminal, the time it takes for the content to reach the terminal can be reduced and the delay time between the request issuance by the terminal and the content playback can be greatly shortened since the distance of content delivery can be shortened compared to the conventional method in which content is delivered from a distribution server, greatly improving the end user's QoE (Quality of Experience).

Third, the terminals do not need to be modified in order to achieve the first and the second effects.

Further, the disclosure of Patent Literature listed above is incorporated herein in its entirety by reference thereto. It should be noted that other objects, features and aspects of the present invention will become apparent in the entire disclosure and that modifications may be done without departing the gist and scope of the present invention as disclosed herein and claimed as appended herewith. Also it should be noted that any combination of the disclosed and/or claimed elements, matters and/or items may fall under the modifications aforementioned.

[Reference Signs List]

100: content
110_1 to 110_N: cache server
111: control signal transmitting/receiving unit
112: content acquirement unit
113: content temporary storage unit
115: analysis unit
116: content list creation unit
120: distribution server apparatus
130: access counting unit
135: load status detection unit
150: mobile network
160: control apparatus
161: control signal transmitting/receiving unit
165: policy apparatus
167: content map creation/storage unit
168: content acquirement instruction unit
170: mobile terminal
180_1 to 180_M, 181_1 to 181_M, 182_1 to 182_M, 183_1 to 183_M: base station apparatus
184: access measurement unit
185: content arrangement determining unit
187: cache server selection unit
190_1 to 190_N: SGSN/GGSN apparatus
195_1 to 195_L, 197_1 to 197_L: RNC apparatus
250: mobile network
260_1 to 260_M, 261_1 to 261_M, 262_1 to 262_M: eNodeB apparatus
290_1 to 290_N: S/P-GW apparatus

**Claims**

1. A content distribution system, comprising in a mobile network:

a plurality of packet forwarding apparatuses that forward a packet;

a plurality of cache servers that temporarily hold a content item and send the content item via any one of the plurality of packet forwarding apparatuses; and
a control apparatus that controls the plurality of cache servers, wherein
the control apparatus comprises:

an access measurement unit that calculates an access frequency for a content item stored in each of the plurality of cache servers based on a number of accesses to the content item;
a content arrangement determining unit that determines an arrangement of content items to the plurality of cache servers using at least one of load status of the plurality of cache servers, topology information of the mobile network, location information of a terminal requesting a content item, and the access frequency, and that instructs the plurality of cache servers to hold a content item according to the determined arrangement; and
a cache server selection unit that, upon reception of a request for a content item from a terminal, instructs a cache server holding the requested content item among the plurality of cache servers to send the requested content item.

2. The content distribution system according to claim 1, wherein
the content arrangement determining unit arranges a content item to a cache server with a smallest $\Sigma_j Cij*Aj*Sj$ where Aj denotes an access frequency for a jth content item, Sj a size of the jth content item, and Cij a cost function for an ith cache server among the plurality of cache servers.

3. The content distribution system according to claim 2, wherein
the content arrangement determining unit calculates the cost function Cij based on load information of the ith cache server among the plurality of cache servers, the topology information of the mobile network, and the location information of the terminal, or on the load information and the topology information.

4. The content distribution system according to any one of claims 1 to 3, wherein
the content arrangement determining unit determines an arrangement of content items at a predetermined time interval or when a predetermined condition is met.

5. The content distribution system according to any one of claims 1 to 4, wherein
the access measurement unit collects a number of accesses to a content item stored in each of the plurality of cache servers at a predetermined time interval or when a predetermined condition is met.

6. The content distribution system according to any one of claims 1 to 5, wherein
the plurality of packet forwarding apparatuses are SGSN apparatuses, GGSN apparatuses, or SGSN/GGSN apparatuses in a mobile network, or S-GW apparatuses, P-GW apparatuses, or S/P-GW apparatuses in a mobile EPC network.

7. The content distribution system according to any one of claims I to 6, wherein
the content item include at least one of video, still image, voice, audio, software, application, and data.

8. A control apparatus that controls in a mobile network a plurality of cache servers that temporarily hold a content item, the control apparatus comprising:

an access measurement unit that calculates an access frequency for a content item stored in each of the plurality of cache servers based on a number of accesses to the content item;
a content arrangement determining unit that determines an arrangement of content items to the plurality of cache servers using at least one of load status of the plurality of cache servers, topology information of the mobile network, location information of a terminal requesting a content item, and the access frequency, and that instructs the plurality of cache servers to hold a content item according to the determined arrangement; and
a cache server selection unit that, upon reception of a request for a content item from a terminal, instructs a cache server holding the requested content item among the plurality of cache servers to send the requested content item via a packet forwarding apparatus.

9. The control apparatus according to claim 8, wherein
the content arrangement determining unit arranges a content item to a cache server with a smallest $\Sigma_j Cij*Aj*Sj$ where Aj denotes an access frequency for a jth content item, Sj a size of the jth content item, and Cij a cost function for an ith cache server among the plurality of cache servers.

10. The control apparatus according to claim 9, wherein
the content arrangement determining unit calculates the cost function Cij based on load information of the ith cache server among the plurality of cache servers, the topology information of the mobile network, and the location information of the terminal, or on the load information and the topology information.

11. A content distribution method, comprising:

by a control apparatus that controls in a mobile network a plurality of cache servers that temporarily hold a content item, calculating an access frequency for a content item stored in each of the plurality of cache servers based on a number of accesses to the content item;
determining an arrangement of content items to the plurality of cache servers using at least one of load status of the plurality of cache servers, topology information of the mobile network, location information of a terminal requesting a content item, and the access frequency;
instructing the plurality of cache servers to hold a content item according to the determined arrangement; and
upon reception of a request for a content item from a terminal, instructing a cache server holding the requested content item among the plurality of cache servers to send the requested content item via a packet forwarding apparatus.

12. The content distribution method according to claim 11, wherein
the control apparatus arranges a content item to a cache server with a smallest $\Sigma_j Cij*Aj*Sj$ where Aj denotes an access frequency a jth content item, Sj a size of the jth content item, and Cij a cost function for an ith cache server among the plurality of cache servers.

13. The content distribution method according to claim 12, wherein
the control apparatus calculates the cost function Cij based on load information of the ith cache server among the plurality of cache servers, the topology information of the mobile network, and the location information of the terminal, or on the load information and the topology information.

FIG. 1

# FIG. 2

~160

CONTROL APPARATUS

~161

TO 165 ← - - - - - - → | CONTROL SIGNAL TRANSMITTING/RECEIVING UNIT | → TO 190

→ TO 110

REQUESTED CONTENT

LOCATION INFORMATION

LOAD

184

ACCESS MEASUREMENT UNIT

168

CONTENT ACQUIREMENT INSTRUCTION UNIT

167

CONTENT MAP CREATION/STORAGE UNIT

187

CACHE SERVER SELECTION UNIT

185

CONTENT ARRANGEMENT DETERMINING UNIT

EP 2 701 067 A1

13

# FIG. 3

**CACHE SERVER** (110_1)

111 — CONTROL SIGNAL TRANSMITTING/RECEIVING UNIT

116 — CONTENT LIST CREATION UNIT

115 — ANALYSIS UNIT

130 — ACCESS COUNTING UNIT

135 — LOAD STATUS DETECTION UNIT

112 — CONTENT ACQUIREMENT UNIT

113 — CONTENT TEMPORARY STORAGE UNIT

EP 2 701 067 A1

FIG. 4

<table>
<tr><td align="center">**INTERNATIONAL SEARCH REPORT**</td><td>International application No.<br>PCT/JP2012/060689</td></tr>
</table>

| A. CLASSIFICATION OF SUBJECT MATTER |
|---|
| *G06F13/00*(2006.01)i, *G06F12/00*(2006.01)i |

According to International Patent Classification (IPC) or to both national classification and IPC

| B. FIELDS SEARCHED |
|---|

Minimum documentation searched (classification system followed by classification symbols)
G06F13/00, G06F12/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | WO 2011/010688 A1 (NEC Corp.),<br>27 January 2011 (27.01.2011),<br>paragraphs [0030] to [0075]<br>(Family: none) | 1-13 |
| Y | JP 2010-57107 A (Nippon Telegraph and<br>Telephone Corp.),<br>11 March 2010 (11.03.2010),<br>claim 9<br>(Family: none) | 1-13 |
| A | Hiroaki SHIBATA, "A Mobile Music Delivery<br>System using Field Features of Contents", IPSJ<br>SIG Notes, 26 November 2007 (26.11.2007), vol.<br>2007, no.117, pages 25 to 30 | 1-13 |

☐ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>02 July, 2012 (02.07.12) | Date of mailing of the international search report<br>10 July, 2012 (10.07.12) |
|---|---|
| Name and mailing address of the ISA/<br>　　Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011096251 A

- JP 2003228534 A